(19)

Europäisches
Patentamt
European
Patent Office
Office européen
des brevets

(11) **EP 2 117 096 A1**

(12) **EUROPEAN PATENT APPLICATION**
published in accordance with Art. 153(4) EPC

(43) Date of publication:
**11.11.2009 Bulletin 2009/46**

(51) Int Cl.:
*H02H 9/02* *(2006.01)*     *C03C 3/12* *(2006.01)*
*C03C 4/14* *(2006.01)*

(21) Application number: **07831763.3**

(22) Date of filing: **13.11.2007**

(86) International application number:
**PCT/JP2007/072033**

(87) International publication number:
**WO 2008/059847 (22.05.2008 Gazette 2008/21)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **13.11.2006 JP 2006306648
07.08.2007 PCT/JP2007/065400**

(71) Applicant: **Tokai Industry Corp.
Tokyo 182-0021 (JP)**

(72) Inventors:
• **MANABE, Kazumi
Chofu-city
Tokyo 182-0021 (JP)**

• **MORISHIGE, Akira
Chofu-city
Tokyo 182-0021 (JP)**
• **MANABE, Takeshi
Chofu-city
Tokyo 182-0021 (JP)**
• **MATSUSHITA, Mitsugi
Chofu-city
Tokyo 182-0021 (JP)**
• **KOBAYASHI, Kenichi
Toshima-ku
Tokyo 171-0051 (JP)**

(74) Representative: **Giovannini, Francesca
Osha Liang
32, avenue de l'Opéra
75002 Paris (FR)**

(54) **ELECTRIC/ELECTRONIC CIRCUIT SYSTEM WITH CONDUCTIVE GLASS MEMBER**

(57)     [Problems]
To provide a means for preventing electric/electronic materials from losing or degrading functionality when electrically conductive glasses are used as such electric/electronic materials.
[Means for Solving the Problems]
An electric/electronic circuit system comprises an electrically conductive glass member and an overcurrent preventing means for preventing overcurrent through the electrically conductive glass member, both contained within the electric/electronic circuit system.

[Fig. 1]

**Description**

TECHNICAL FIELD

The present invention relates to electric/electronic circuit systems with electrically conductive glass members (for example, electrically conductive vanadate glasses) as electric/electronic materials.

BACKGROUND ART

Conventionally, various electrically conductive glasses have been proposed. To describe by way of example of electrically conductive vanadate glasses containing vanadium pentoxide, such vanadium-containing glasses have electronic conductivities based on the hopping of extranuclear electrons, as opposed to oxide-based glasses that are usually ionically conductive (usually electrically insulating). Through this mechanism, relatively high electrical conductivities are exhibited. The electrically conductive glasses may contain potassium oxide and/or sodium oxide as a second component.

In recent years, techniques have been proposed in which barium and iron are added as subcomponents for further improving the electrical conductivities of the electrically conductive vanadate glasses at room temperature (Patent References 1 and 2). The electrically conductive vanadate glasses according to these references are oxide-based glass compositions containing vanadium, barium and iron, whose electrical conductivities at room temperature range from $10^{-4}$ to $10^{-1}$ S·cm$^{-1}$. Novel applications are suggested for the highly conductive glasses, such as electrode materials, solid-state electrolytes and sensors such as thermistors or the like.

When electrically conductive glasses are used as electric/electronic materials such as electrodes, such merits are obtained that uniform electrical conductivities are assured across the whole body or layer and, since they are non-crystalline, they will not wear out, always supplying stable electric power. Further, since the electrically conductive glasses can be micromachined, such merits may also be obtained that reducing the width of gaps may increase discharge power. In addition, there are other merits that they will not undergo oxidization or weathering and are environmentally friendly. As such, electrodes for plasma generators to be used for film forming or the like through etching and/or sputtering are proposed in Patent Reference 3, for example, in which electrically conductive vanadate glasses are machined by irradiation with focused ion beams (FIB) or laser beams.

  Patent Reference 1: Japanese Unexamined Patent Publication No. 2003-34548
  Patent Reference 2: Japanese Unexamined Patent Publication No. 2004-2181
  Patent Reference 3: Japanese Unexamined Patent Publication No. 2006-248867

DISCLOSURE OF THE INVENTION

PROBLEMS TO BE SOLVED BY THE INVENTION

The inventors have conducted researches on the use as electric/electronic materials of electrically conductive glasses including this electrically conductive vanadate glass. In the process of researches, the inventors found that, when electricity is conducted through an electric/electronic material composed of an electrically conductive glass, the electric current flowing through the glass will minimally increase with an initial increase in voltage, but the behavior will start changing at a certain magnitude of voltage so that the electric current will rapidly increase in accordance with an increase in voltage and, even at a constant voltage, the temperature of the electrically conductive glass will gradually increase due to heat generation, accompanied by a gradual increase in the electric current. Further, the inventors have found that, under some conditions, the glass as an electric/electronic material may melt due to the rapid increase in electric current. In particular, as subsequently to be described, this electrically conductive glass has extremely excellent machinability so that micromachining at nanosize levels may be made, for example, by focused ion beam machining; however, there is a danger that minimum melting may destroy the functionality of the electronic members, even if such micromachining at nanosize levels has successfully been made. As such, the present invention aims to provide a means for preventing electric/electronic materials from losing or degrading functionality when electrically conductive glasses are used as such electric/electronic materials.

MEANS FOR SOLVING THE PROBLEMS

The present invention (1) is an electric/electronic circuit system comprising an electrically conductive glass member and an overcurrent preventing means for preventing overcurrent through the electrically conductive glass member, both contained within the electric/electronic circuit system.

The present invention (2) is the electric/electronic circuit system according to the invention (1) wherein the overcurrent preventing means is a resistor connected in series with the electrically conductive glass member.

The present invention (3) is the electric/electronic circuit system according to the invention (2) wherein the resistor has a resistance which may be calculated on the basis of a predetermined voltage and an allowable current value, the resistance functioning to prevent an electric current exceeding the allowable current value from flowing through the electrically conductive glass member even when the predetermined voltage is applied to the electrically conductive glass member.

The present invention (4) is the electric/electronic circuit system according to the invention (3) wherein the resistance is not lower than a first value that is given by dividing the predetermined voltage by the allowable current of the electrically conductive glass member, or is not lower than a second value that is given by subtracting the resistance of the electrically conductive glass member from the first value, or is not lower than a third value that is given by multiplying the first or second value by a safety factor.

The present invention (5) is the electric/electronic circuit system according to the invention (3) or (4) further comprising an applied voltage varying means capable of varying a voltage applied to the electrically conductive glass member within a predetermined range, wherein the predetermined voltage is the maximum voltage within the predetermined range.

The present invention (6) is the electric/electronic circuit system according to the invention (1) wherein the overcurrent preventing means is a protective resistance element connected in series to the electrically conductive glass member.

The present invention (7) is the electric/electronic circuit system according to the invention (6) wherein the protective resistance element is a resistance element having positive temperature characteristics.

The present invention (8) is the electric/electronic circuit system according to the invention (1) wherein the overcurrent preventing means comprises an electric current detecting means for detecting the electric current flowing through the electrically conductive glass member and an electric current control means for controlling or disconnecting the electric current flowing through the electrically conductive glass member on the basis of information about the detected current.

The present invention (9) is the electric/electronic circuit system according to the invention (1) wherein the overcurrent preventing means comprises a temperature detecting means for detecting temperature of the electrically conductive glass member and an electric current control means for controlling or disconnecting the electric current flowing through the electrically conductive glass member on the basis of information about the detected temperature.

The present invention (10) is the electric/electronic circuit system according to any one of the inventions (1) to (9) wherein the electrically conductive glass member is a member whose electrically conductive glass portion is precision-machined by irradiation with an ion beam or laser beam.

The present invention (11) is the electric/electronic circuit system according to any one of the inventions (1) to (10) wherein the electrically conductive glass is an electrically conductive vanadate glass.

The present invention (12) is the electric/electronic circuit system according to any one of the inventions (1) to (11) which is an electric/electronic component or an electric/electronic product in which the component is incorporated.

The meaning of each term used in Description will now be defined. First of all, an "electrically conductive glass" refers to a glass having an electrical conductivity of at least $1 \times 10^{-13}$S/cm (preferably at least $1 \times 10^{-9}$S/cm, more preferably at least $1 \times 10^{-7}$S/cm).
Examples of "electrically conductive glasses" may include ionically conductive glasses, electronically conductive glasses and mixed conductive glasses in which the two described types of conductivities may coexist. "Ionically conductive glasses" are not particularly limited, examples of which include glasses containing $AgI-Ag_2O-B_2O_2$, $AgI-Ag_2O-P_2O_5$, $AgI-Ag_2O-WO_3$, $LiCl-Li_2O-B_2O_3$ or the like. Examples of "electronically conductive glasses" include electron-charged hopping conductive glasses and bandgap conductive glasses. The electron-charged hopping conductive glasses are not particularly limited, examples of which include glasses containing vanadates. The bandgap conductive glasses are not particularly limited, examples of which include calcogenide glasses such as Ge-Te-S, Ge-Te-Se and Ge-Te-Sb. The "mixed conductive glasses" are not particularly limited, examples of which include glasses containing vanadates, AgI and $AgO_2$ (refer to Japanese Unexamined Patent Publication No. 2004-331416) and $Li_xWO_3$. Among them, glasses containing vanadates are particularly preferred because they are highly conductive. An "electrically conductive glass member" is not particularly limited as long as it includes an electrically conductive glass as an electrically conductive portion and may be a member consisting only of an electrically conductive glass or may be a composite member with other materials. An "electric/electronic circuit" means an electric circuit (heavy current) and/or an electronic circuit (weak current). A "system" is not particularly limited as along as it is an "object" having an electrically conductive glass member and an overcurrent preventing means, examples of which include electric/electronic components and electric/electronic products including such electric/electronic components. An "overcurrent preventing means" is not particularly limited as long as it is capable of preventing overcurrent, which may cause melting of the electrically conductive glass members, as a single element or as a result of combination of multiple elements. Examples of overcurrent preventing means capable of exhibiting such a function as single elements include resistors and protective resistance elements and examples of those as a result of combination of multiple elements include electric current detecting means in combination with electric current control means and temperature detecting means in combination with electric current control means.

BEST MODE FOR CARRYING OUT THE INVENTION

The electric/electronic circuit system according to the present invention will be described in detail below by way of example of an electrically conductive vanadate glass as an electrically conductive glass. The technical scope of the present invention is not, however, limited to the electrically conductive vanadate glass. The electric/electronic circuit system according to the present invention comprises an electrically conductive vanadate glass member as an electric/electronic material and an overcurrent preventing means for preventing overcurrent through the member, both contained within an electric/electronic circuit. The "electric/electronic material consisting of an electrically conductive vanadate glass" and the "overcurrent preventing means," composing the electric/electronic circuit system, will be described below.

First, the "electric/electronic material comprising an electrically conductive vanadate glass" is made using an electrically conductive vanadate glass as a raw material. Components, compositions and processes for production of the "electrically conductive vanadate glass" will be described in detail below. This electrically conductive glass is the same as the glasses described in Patent References 1 to 3. Reference should be made to the contents of these descriptions for specific conditions not described in this Description.

The "electrically conductive vanadate glass" according to this best mode is not particularly limited as long as it contains a vanadate. For the reason of high electrical conductivity, however, it is preferably an oxide-based glass composition containing vanadium, barium and iron. First, vanadium is a constituent element for forming the main skeleton of the oxide-based glass, whose oxidation number may be variable such as 2, 3, 4 or 5 to increase the probability of electrons hopping. Next, barium is a constituent element to be added for three-dimensionalizing the two-dimensionally configured glass skeleton of vanadium oxide. Further, iron is a component for adjusting electrical conductivity, whose amount may be varied to control electrical conductivity.

The content of vanadium oxide in the vanadate glass is preferably in the range of 0.1 to 98 mol% and is more preferably in the range of 40 to 98 mol%. The content of barium oxide in the vanadate glass is preferably in the range of 1 to 40 mol%. The content of iron oxide in the vanadate glass is preferably in the range of 1 to 20 mol%. Further, the molar ratio (B:V) between barium oxide (B) and vanadium oxide (V) is preferably from 5:90 to 35:50. Also, the molar ratio (F:V) between iron oxide (F) and vanadium oxide (V) is preferably from 5:90 to 15:50. Compositions are, however, variable depending on the kind, application and the like of electric/electronic materials and are not limited to the ranges described above.

Further, the electrically conductive vanadate glass may contain rhenium. Since rhenium is excellent in electrical conductivity (in addition, since its oxidation number is variable, it can increase electron hopping effects), it can further increase the electrical conductivity of the vanadate glass. In addition, since the glass transition temperature and the crystallization temperature may be set within specified ranges, annealing may be facilitated. When rhenium is contained, the amount of it in the composition described above is preferably from 1 to 15 mol%.

Further, the electrically conductive vanadate glass may contain other glass components, such as calcium oxide, sodium oxide, potassium oxide, barium oxide, boron oxide, strontium oxide, zirconium oxide, silver oxide, silver iodide, lithium oxide, lithium iodide, cesium oxide, sodium iodide, indium oxide and tin oxide.

The electrical conductivity of such a vanadate glass at a room temperature of 25°C is in the range of $10^{-4}$ to $10^{-1}$S·cm$^{-1}$ and is preferably in the range of $10^{-3}$ to $10^{-2}$S·cm$^{-1}$. In particular, with the view of maintaining semiconductivity, it is preferably not higher than $10^{-1}$S·cm$^{-1}$. Preferable electrical conductivities are, however, variable depending on the kind, application and the like of electric/electronic materials and are not limited to the ranges described above. Electrical conductivities herein refer to volume resistivities as determined by the four-terminal method.

With the view of adjusting electrical conductivities, in order to dilute the base composition for electrically conductive glasses (glass compositions based on vanadium, barium and oxide) diluent components [preferably, $SiO_2$(60 to 70 mol%), $P_2O_3$(10 to 20 mol%), $Al_2O_3$(2 to 10 mol%), $ZnO$(0 to 2 mol%), $Sb_2O_3$(0 to 2 mol%), $TiO_2$(0 to 2 mol%)] may also be added to the composition.

The electrically conductive vanadate glass may be produced by melting and quenching a mixture containing vanadate oxide, barium oxide and iron oxide (and, optionally, rhenium oxide) to obtain a glass composition thereof and then retaining the glass composition for a predetermined period of time at a temperature that is at or higher than the glass transition temperature, a temperature that is at or lower than the crystallization temperature or an annealing temperature that is at or higher than the crystallization temperature but is at or lower than the softening point for the glass composition.

For example, a mixture containing 50 to 90 mol% vanadate oxide, 5 to 35 mol% barium oxide and 5 to 25 mol% iron oxide (and, optionally, 1 to 10% by mass of rhenium oxide in relation to 100% by mass of the mixture are added) is heated and melted in a platinum crucible or the like and then quenched to vitrified, before heat-treating the vitrified product at predetermined annealing conditions.

Now that the components, compositions and processes for production of the "electrically conductive vanadate glass" have been described, "electric/electronic materials" comprising the electrically conductive vanadate glass will then be described. The "electric/electronic materials" here are not particularly limited as long as they are used for electric and electronic components or the like, examples of which include sensors (for example, potential sensor), bulbs, electrodes having polarities on both ends and discharge needles to be used for corona discharge, plasma discharge or the like.

An example of such electric/electronic materials is a precision-machined electrically conductive glass member that is obtained by irradiating an electrically conductive glass with an ion beam or laser beam. When such materials are used as electric/electronic materials, such merits as described below will be obtained. First, when metals are used as such materials, they are susceptible to oxidization or tend to rust where moisture is abundant. For the electrically conductive vanadate glass, however, it can not only be used as an electric/electronic material even in water, but can have an extremely long life as well because it will not rust away.

Second, the inventors have confirmed that the electrically conductive vanadate glass has far better machinability in comparison with other materials (metals, other electrically conductive glasses). Specifically, they have confirmed that the electrically conductive vanadate glass has unmatched machinability in laser machining and focused ion beam (FIB) machining, not to mention mechanical polishing. In particular, it has exhibited outstanding machinability in FIB which is essential in performing micromachining. For example, in performing FIB machining, it can be processed 10 to 10,000 times faster in comparison with metals. Also, in performing FIB machining, the fineness limit to metals is approximately 1 $\mu$m, while the fineness limit to the electrically conductive vanadate glass is not more than several hundreds nm.

Third, as a merit in the context of specific applications (electric/electronic materials), when the electrically conductive vanadate glass is used as "electrodes," since the glass is non-crystalline, such electrodes will not wear out and can always apply stable electric power and, in addition, since micromachining may be performed, gaps can be made smaller in width so that discharge efficiency may be improved. Also, when the electrically conductive vanadate glass is used as "discharge needles," such discharge needles can be made excellently durable and low-cost, in addition to being excellently dust-free.

By virtue of such merits as described above, the electrically conductive vanadate glass is effective in wide areas of applications (electric/electronic materials) on the order of centimeters to nanometers.

Next, the overcurrent preventing means, as a characteristic element of the present invention, connected to the electric/electronic circuit system according to this best mode will be described. As stated above, electrically conductive glasses (for example, electrically conductive vanadate glass) are useful in various electric/electronic materials and, considering their characteristics such as machinability, the possibilities are understood as endless. As stated above, however, the inventors have found that such electrically conductive glasses exhibit the behavior in which, when the voltage rises, the electric current will rapidly increase in accordance with characteristics of each electrically conductive glass, with a result that they will lose their functions as electric/electronic materials such as by melting of the glasses, even if micromachining or the like has successfully been made. When they have such properties, electric/electronic products may fail or be rendered unusable due to variation of applications or conditions of use.

Therefore, measures must be taken to prevent such electric/electronic products from failing or being rendered unusable, regardless of applications or conditions of use. As such, the present invention has adopted electrically conductive glasses (such as electrically conductive vanadate glass) as electric/electronic materials, and also solved the new problems that may arise in association with the adoption of such glasses by introducing the "overcurrent preventing means" into the system. The overcurrent preventing means in various forms will be illustrated below.

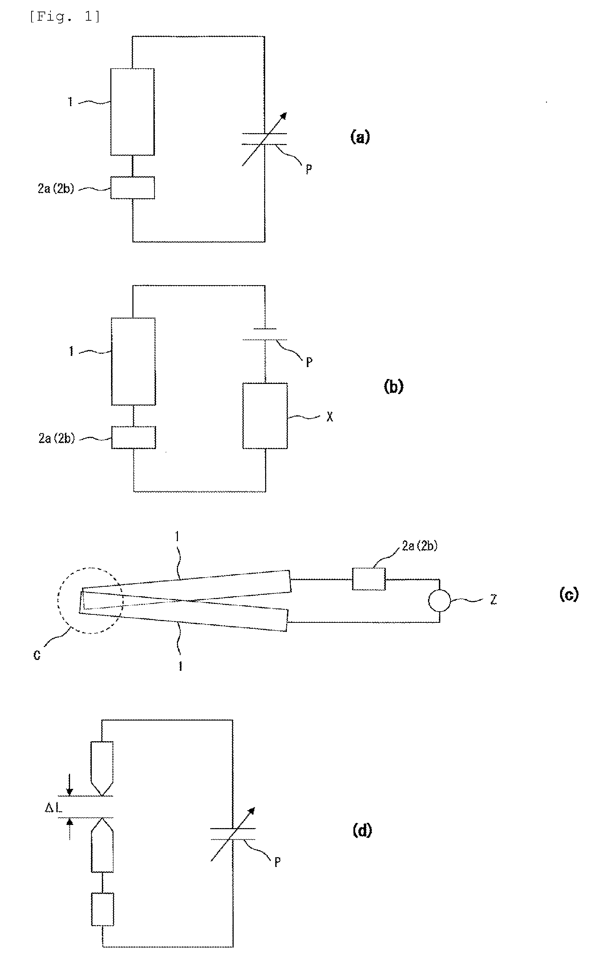

First, Fig. 1 illustrates an embodiment in which an electrically conductive glass member 1 is provided in series with a resistor 2a or a protective resistance element 2b in an electric/electronic circuit (first of best modes). Fig. 1(a) shows an example in which an electrically conductive glass member 1 and a resistor 2a or a protective resistance element 2b are included in a single circuit and Fig. 1(b) shows an example in which, in addition to the above elements, an electric circuit portion X is included. The resistor 2a here is a typical resistor that is easily available. Also, the protective resistance element 2b may be of any type but is preferably a resistance element having positive temperature characteristics. When such a resistance element is used, as an overcurrent flows through an electric/electronic material to be protected, the resistance element connected to this circuit will rapidly increase its resistance due to the overcurrent to function to limit the overcurrent. Examples of resistance elements include low-resistance PTC (Positive Temperature Coefficient) elements known as elements for protecting circuit elements against overcurrents generated in electric/electronic circuits. The low-resistance PTC elements utilize their characteristics such that their temperatures rise due to Joule heat generated as overcurrents flow to rapidly increase their resistance. In the drawings, those of power supplies P shown as constant-voltage power supplies may be variable-voltage power supplies and those of power supplies P shown as variable-voltage power supplies may be constant-voltage power supplies (also in the subsequent drawings).

Figs. 1(c) and 1(d) show specific examples of applications of this mode. First, Fig. 1(c) illustrates an exemplary system in which electrically conductive glass members 1 with different resistances are combined to form a temperature sensor. Here, the contact C of the electrically conductive glass members 1 with different resistances makes a sensor portion. In this system, although no power supply is provided, the temperature sensor portion represents a power supply so that an electric current corresponding to a temperature will flow through the system. The electric current will then be measured by an ammeter Z so that the temperature corresponding to the electric current may be displayed. In case of this system, the resistor 2a or the protective resistance element 2b will select resistances in accordance with limited currents with small capacity for flowing the electric currents of the both electrically conductive glass members 1/1.

Next, Fig. 1(d) illustrates an exemplary system in which an electrically conductive glass 1 is used as discharge electrodes. By way of example here, when the voltage to be applied is 2 kV at a maximum and the allowable current for the electrically conductive glass is 10 mA, the magnitude of resistance will be set to 2 KV/10 mA=200 KΩ, for example.

When the system is incorporated into an actual electric/electronic product, the voltage applied to the electrically conductive glass member of the system is, in most cases, variable. As such, when a resistor is used as an overcurrent preventing means, considering the voltage amplitude that may be applied, overcurrents may be prevented whatever voltage is applied, by determining the resistance by the following formula.

$$[resistance] \geq [maximum\ voltage]/[allowable\ current\ for\ electrically\ conductive\ glass]$$

Also, considering the resistance of the electrically conductive glass member, the resistance may have a value given by subtracting the resistance of the electrically conductive glass member from the resistance above. A resistance of an electrically conductive glass member refers a value as given by applying direct-current, two-electrode method or direct-current, four-electrode method and alternating-current, four-electrode method (when the electrical conductivity has a value of $1 \times 10^{-5} S \cdot cm^{-1}$ or higher) using an electrically conductive glass member at room temperature (25°C). An electrode here is made by securing leads on a glass surface using molten metallic silver paste.

In selecting actual resistors, the maximum voltage should preferably be divided by an electric current multiplied by some safety factor (for example, 1/2 of an allowable current), rather than allowing an electric current to flow right up to an allowable current, in consideration of variation in performance between products. Also, although resistance may further be increased, it should satisfy the formula below in order to prevent inconveniences in use.

$$[resistance] \leq [maximum\ voltage]/[required\ minimum\ current\ for\ electrically\ conductive\ glass]$$

Also, the lower limit of the above resistance may have a value given by subtracting the resistance of the electrically conductive glass member from the resistance above.

By way of specific example, when the voltage to be applied is 2 kV at a maximum and the allowable current for the electrically conductive glass is 10 mA, the resistance should be selected 2 KV/10 mA=200 KΩ or higher. Also, when the required minimum current for the electrically conductive glass is 1 μA, the upper limit of the resistance will be 2 KV/1 μA=2 GΩ.

The meanings of these terms used in Description will now be defined. First, a "maximum voltage" is the maximum voltage which may be applied through an electrically conductive glass member incorporated in the electric/electronic circuit system.

An "allowable current" is synonymous with the general meaning used in the industry and refers to the maximum current that may be used safely without causing electrically conductive glasses to run away thermally. For electrically conductive glasses, allowable values for voltage are not particularly limited and stable operation may be enabled by forming the resistance of circuits so that it may not exceed the allowable current. Here, an allowable current for an electrically conductive glass member, for example, can be measured by the following procedure. First, an electrically conductive glass member to be measured (a member having the identical shape and size to a member actually used) is provided. Next, the electrically conductive member is connected to a circuit for testing so that voltages may be applied at the same location to the actual use. Then, the electric current and temperature of the electrically conductive glass portion are measured in accordance with the temperature testing specified in JIS C 4604.7.4, in an atmosphere at room temperature (25°C) with the temperature of the electrically conductive glass at the room temperature, under the conditions where the electric current values are not rated currents but are varied as appropriate, to define the initial current value at which the temperature increases by 25°C or more per minute under the condition where a certain voltage is applied as an "allowable current." A "required minimum current" refers to the minimum current required to provide desired functions when the system is incorporated into an electrical/electronic product.

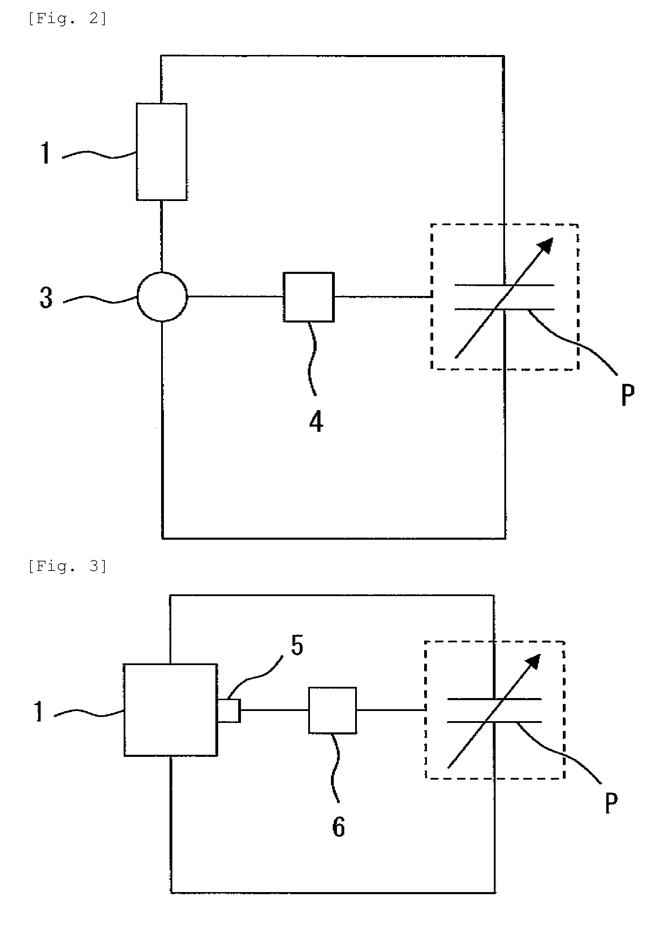

Next, Fig. 2 shows an embodiment (second of best modes) in which an electrically conductive glass member 1 as an electric/electronic material, an electric current detecting means 3 for detecting an electric current flowing through the electrically conductive glass member 1, and an electric current control means 4 for controlling or disconnecting the electric current flowing through the electrically conductive glass member so that the electric current may be brought to or below a predetermined value when the electric current detected at the electric current detecting means 3 exceeded the predetermined value, all provided in an electric/electronic circuit system. The electric current detecting means 3 here may be of any type and may be located anywhere as long as it is capable of detecting an electric current flowing through the electrically conductive glass member 1. When the detected current exceeds the predetermined value, the electric current control means 4 may function to increase the resistance in the circuit in order to decrease the electric current or may be configured to decrease the voltage itself. The example illustrated in Fig. 2 shows an example in which, when the electric current control means 4 determines that the electric current detected at the electric current detecting means 3 exceeded the predetermined value, it will exercise control to decrease the voltage at a variable voltage power supply P. A predetermined value of the electric current here is, for example, the allowable current value for an electrically conductive glass mentioned above.

Next, Fig. 3 shows an embodiment (third of best modes) in which an electrically conductive glass member 1 as an electric/electronic material, a temperature detecting means 5 for detecting temperature of the electrically conductive glass member 1, and an electric current control means 6 for decreasing or disconnecting an electric current flowing through the electrically conductive glass member, all provided in an electric/electronic circuit system. The temperature detecting means 5 here may be of any type as long as it is capable of detecting the temperature of the electrically conductive glass member 1. Also, when the detected temperature exceeds a predetermined value, the electric current control means 6 may function to increase the resistance in the circuit in order to decrease the electric current or may be configured to decrease the voltage itself. The example illustrated in Fig. 3 shows an example in which, when the electric current control means 4 determines that the temperature detected at the temperature detecting means 5 exceeded the predetermined value, it will exercise control to decrease the voltage at a variable voltage power supply P. A predetermined temperature here is not particularly limited as long as it is at or lower than the temperature at which thermal runaway occurs and is, for example, 50°C.

EXAMPLES

Test for Confirming Electrical Behavior of Electrically Conductive Vanadate Glass

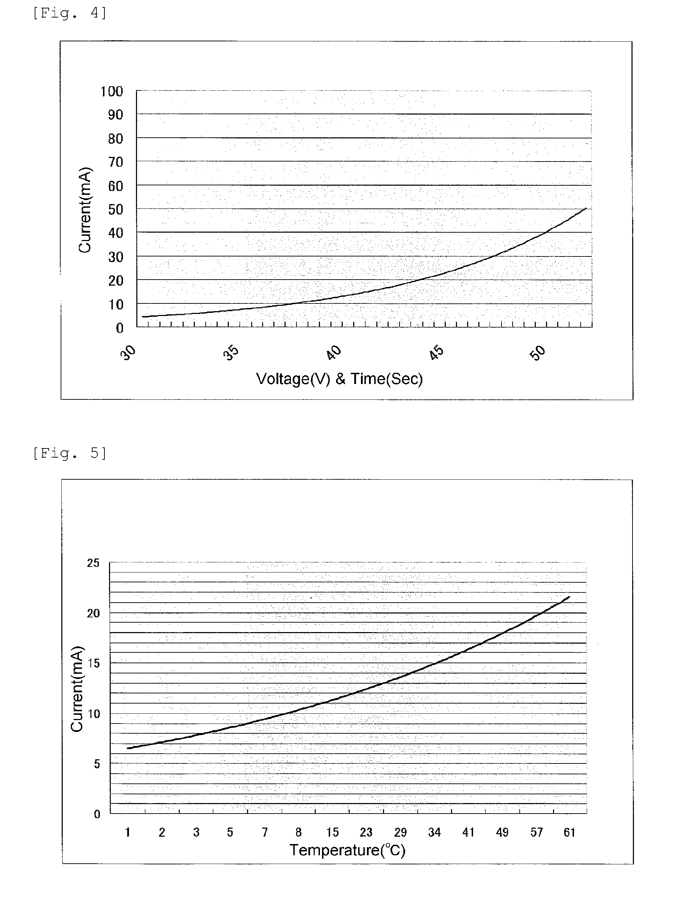

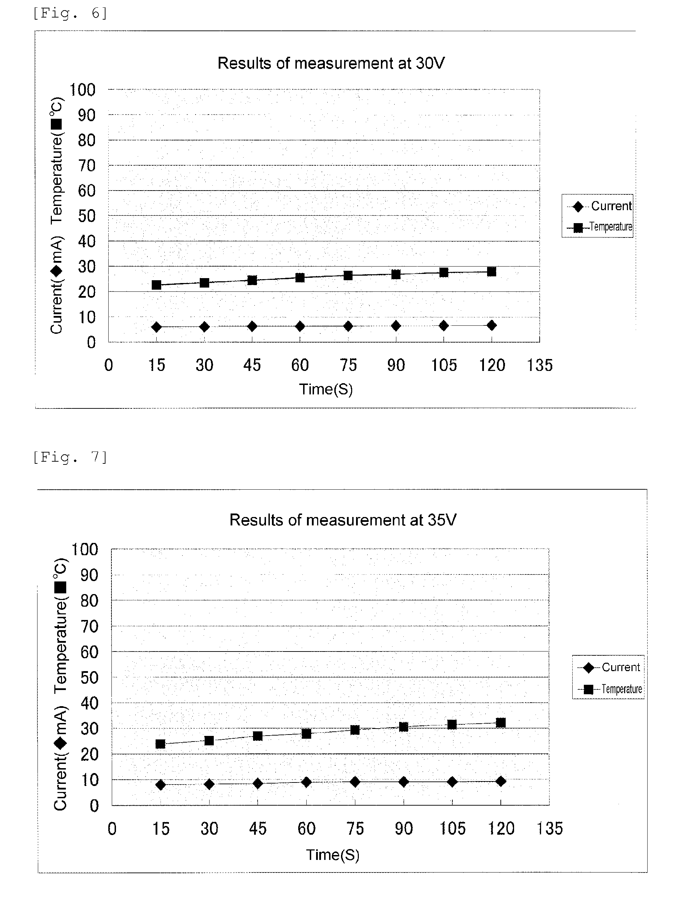

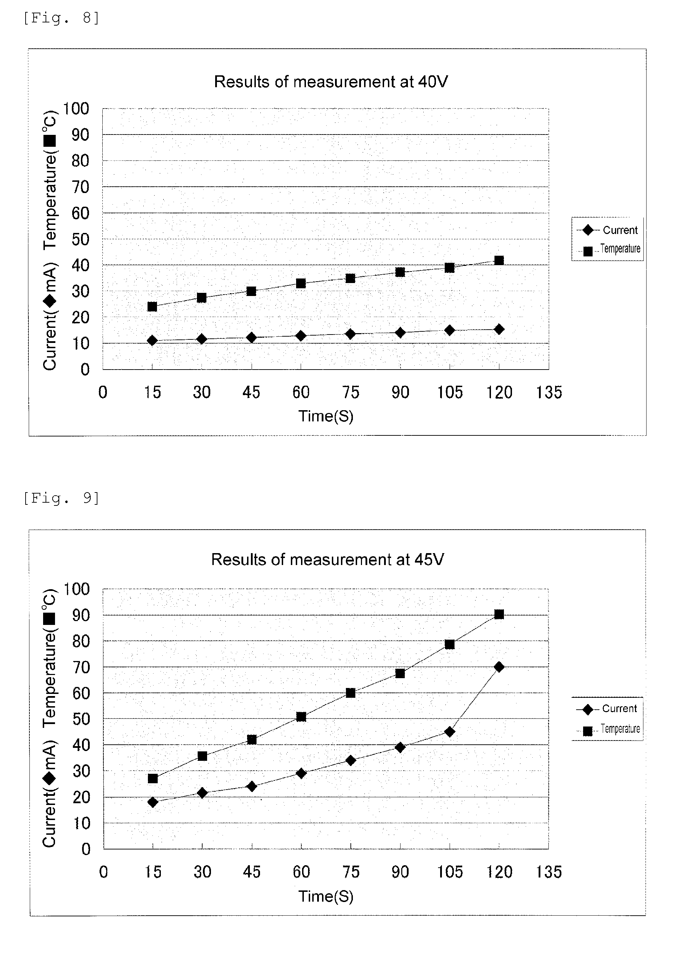

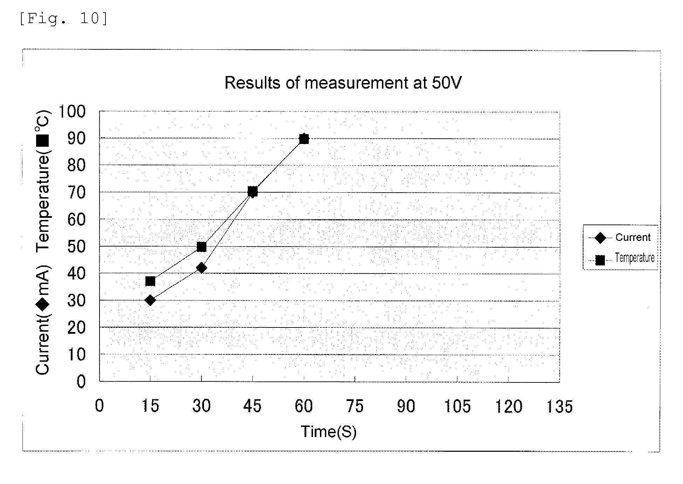

First, in a manner similar to that in Example 3 of Japanese Unexamined Patent Publication No. 2006-248867, an electrode comprising an electrically conductive vanadate glass member (glass transition temperature: 397°C, electrical conductivity: $7.3 \times 10^{-3}$ S/cm) was fabricated. Next, an electric/electronic circuit system to which this electrode was attached was built and a voltage was applied to the both ends of the electrode and gradually increased. The results are shown in Fig. 4. In Fig. 4, the ordinate axis represents electric current and the abscissa axis represents voltage. As a result, as shown in Fig. 4, it was found that as the voltage increases, the electric current will gradually increase and, when the voltage is just above 40 V, the gradient of the electric current increase will rapidly increase (thermal runaway) and will soon reach the temperature at which the electrode will melt and be rendered unusable, although not shown. Next, the relationship between the temperature of the electrode and the electric current was examined when a certain voltage (10 V) was applied. As a result, as shown in Fig. 5, it was found that as the temperature increases over time, the electric current will also increase and, when the electric current exceeds 10 mA at the voltage, the temperature will approach the glass transition temperature of the vanadate glass as the material of the electrode, increasing the danger of rendering it unusable. Also, the allowable current of the electrically conductive vanadate glass member was determined (by applying a predetermined voltage and measuring and plotting the temperature and electric current every 15 seconds) in accordance with the procedure for measurement described above to be approximately 20 mA (Figs. 6 to 10). In the system below, therefore, an overcurrent preventing means was selected such that an electric current value multiplied by a safety factor 1/2 (10 mA) may not be reached or exceeded.

Designing 1 of Electric/Electronic Circuit System with Overcurrent Preventing means

On the basis of the results of the test for confirming electrical behavior of electrically conductive vanadate glass described above, in an electric/electronic circuit system in which a constant voltage of 1 to 10 V is applied, a 1 kΩ resistor was attached in series with the electrode so that the electric current flowing through the electrode may not exceed 10 mA. Since no electric current exceeding 10 mA could flow through the electrode, thereby, it was made possible to prevent the electrode from being damaged due to thermal runaway. In a similar manner, a 5 kΩ resistor was attached for a constant voltage of 1 to 50 V, a 10 kΩ resistor was attached for a constant voltage of 1 to 10 V, and a 1 MkΩ resistor was attached for a constant voltage of 1 to 10,000 V, to obtain similar results.

Designing 2 of Electric/Electronic Circuit System with Overcurrent Preventing means

In plasma generators and/or light emitting devices, applying a direct-current voltage of 40 V for example, in fabricating an intended electric/electronic circuit system, a 4 KΩ resistance element was connected in series to the electric/electronic circuit system for the purpose of suppressing the electric current at or below 10 mA. It was thereby made possible to produce stable plasma generators and/or light emitting devices.

Designing 3 of Electric/Electronic Circuit System with Overcurrent Preventing means

In plasma generators and/or light emitting devices, applying a direct-current voltage of 40 V for example, in fabricating an intended electric/electronic circuit system, a 4 KΩ resistance element was connected in series to the electric/electronic circuit system for the purpose of suppressing the electric current at or below 10 mA. In so doing, a system capable of limiting electric current and a circuit for detecting an electric current flowing across the resistance were provided in part of the circuit. It was thereby made possible to produce stable plasma generators and/or light emitting devices.

BRIEF DESCRIPTION OF THE DRAWINGS

Fig. 1 shows an electric/electronic circuit system according to the first of best modes in which an electrically conductive glass member 1 is provided in series with a resistor 2a or a protective resistance element 2b within an electric/electronic circuit;

Fig. 2 shows an electric/electronic circuit system according to the second of best modes in which an electrically conductive glass member 1, an electric current detecting means 3 and an electric current control means 4 are provided within the electric/electronic circuit system;

Fig. 3 shows an electric/electronic circuit system according to the third of best modes in which an electrically conductive glass member 1, a temperature detecting means 5 and an electric current control means 6 are provided within the electric/electronic circuit system;

Fig. 4 is a chart representing changes in electric current flowing through the electric/electronic circuit system of Example and changes in temperature of the electrically conductive glass member 1 when voltages are varied in the system;

Fig. 5 is a chart representing changes in electric current flowing through the electric/electronic circuit system of Example and changes in temperature of the electrically conductive glass member 1 when voltage is set at 10 V;

Fig. 6 is a chart representing changes in electric current value and changes in temperature of the electrically conductive glass member of Example at a voltage of 30 V;

Fig. 7 is a chart representing changes in electric current value and changes in temperature of the electrically conductive glass member of Example at a voltage of 35 V;

Fig. 8 is a chart representing changes in electric current value and changes in temperature of the electrically conductive glass member of Example at a voltage of 40 V;

Fig. 9 is a chart representing changes in electric current value and changes in temperature of the electrically conductive glass member of Example at a voltage of 45 V; and

Fig. 10 is a chart representing changes in electric current value and changes in temperature of the electrically conductive glass member of Example at a voltage of 50 V.

DESIGNATION OF REFERENCE NUMERALS

1       electrically conductive glass member
2a      resistor
2b      protective resistance element
3       electric current detecting means
4, 6    electric current control means
5       temperature detecting means
X       other electric circuit portion
P       power supply
C       contact

Z        ammeter

**Claims**

1. An electric/electronic circuit system comprising an electrically conductive glass member and an overcurrent preventing means for preventing overcurrent through the electrically conductive glass member, both contained within the electric/electronic circuit system.

2. The electric/electronic circuit system according to Claim 1, wherein the overcurrent preventing means is a resistor connected in series to the electrically conductive glass member.

3. The electric/electronic circuit system according to Claim 2, wherein the resistor has a resistance which may be calculated on the basis of a predetermined voltage and an allowable current value, the resistance functioning to prevent an electric current exceeding the allowable current value from flowing through the electrically conductive glass member even when the predetermined voltage is applied to the electrically conductive glass member.

4. The electric/electronic circuit system according to Claim 3, wherein the resistance is not lower than a first value that is given by dividing the predetermined voltage by the allowable current of the electrically conductive glass member, or is not lower than a second value that is given by subtracting the resistance of the electrically conductive glass member from the first value, or is not lower than a third value that is given by multiplying the first or second value by a safety factor.

5. The electric/electronic circuit system according to Claim 3 or 4, further comprising an applied voltage varying means capable of varying a voltage applied to the electrically conductive glass member within a predetermined range, wherein the predetermined voltage is the maximum voltage within the predetermined range.

6. The electric/electronic circuit system according to Claim 1, wherein the overcurrent preventing means is a protective resistance element connected in series with the electrically conductive glass member.

7. The electric/electronic circuit system according to Claim 6, wherein the protective resistance element is a resistance element having positive temperature characteristics.

8. The electric/electronic circuit system according to Claim 1, wherein the overcurrrent preventing means comprises an electric current detecting means for detecting the electric current flowing through the electrically conductive glass member and an electric current control means for controlling or disconnecting the electric current flowing through the electrically conductive glass member on the basis of information about the detected current.

9. The electric/electronic circuit system according to Claim 1, wherein the overcurrrent preventing means comprises a temperature detecting means for detecting temperature of the electrically conductive glass member and an electric current control means for controlling or disconnecting the electric current flowing through the electrically conductive glass member on the basis of information about the temperature.

10. The electric/electronic circuit system according to any one of Claims 1 to 9, wherein the electrically conductive glass member is a member whose electrically conductive glass portion is precision-machined by irradiation with an ion beam or laser beam.

11. The electric/electronic circuit system according to any one of Claims 1 to 10, wherein the electrically conductive glass is an electrically conductive vanadate glass.

12. The electric/electronic circuit system according to any one of Claims 1 to 11, which is an electric/electronic component or an electric/electronic product in which the component is incorporated.

[Fig. 1]

(a)

(b)

(c)

(d)

[Fig. 2]

[Fig. 3]

[Fig. 4]

[Fig. 5]

[Fig. 6]

Results of measurement at 30V

[Fig. 7]

Results of measurement at 35V

[Fig. 8]

Results of measurement at 40V

[Fig. 9]

Results of measurement at 45V

[Fig. 10]

**EP 2 117 096 A1**

## INTERNATIONAL SEARCH REPORT

International application No.

PCT/JP2007/072033

A. CLASSIFICATION OF SUBJECT MATTER
*H02H9/02(2006.01)i, C03C3/12(2006.01)i, C03C4/14(2006.01)i*

According to International Patent Classification (IPC) or to both national classification and IPC

B. FIELDS SEARCHED

Minimum documentation searched (classification system followed by classification symbols)
H02H9/02, C03C3/12, C03C4/14

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-340126 A  (Kobe Steel, Ltd.), 08 December, 2000 (08.12.00), Par. Nos. [0007], [0016] to [0023]; Figs. 1, 3 (Family: none) | 1-12 |
| Y | JP 2006-248867 A  (Kitakyushu Foundation for the Advancement of Industry, Science and Technology), 21 September, 2006 (21.09.06), Claims 1 to 3; Par. No. [0026] (Family: none) | 1-12 |
| Y | JP 2002-510883 A  (Argus Photonics Group, Inc.), 09 April, 2002 (09.04.02), Par. Nos. [0092] to [0095]; Fig. 9 & US 6052402 A1        & EP 1070369 A | 6,7 |

| ☒ | Further documents are listed in the continuation of Box C. | | ☐ | See patent family annex. |

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search
06 December, 2007 (06.12.07) | Date of mailing of the international search report
18 December, 2007 (18.12.07) |
|---|---|
| Name and mailing address of the ISA/
Japanese Patent Office | Authorized officer |
| Facsimile No. | Telephone No. |

Form PCT/ISA/210 (second sheet) (April 2007)

16

**INTERNATIONAL SEARCH REPORT**

International application No.

PCT/JP2007/072033

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-55362 A (Kabushiki Kaisha Haiden Kenkyusho), 19 February, 2004 (19.02.04), Par. No. [0036]; Fig. 15 (Family: none) | 8 |
| Y | JP 01-309328 A (Tokyo Electron Ltd.), 13 December, 1989 (13.12.89), Page 7, upper right column, lines 13 to 18 & US 4963713 A1        & US 5155331 A1 & EP 0325243 A2 | 9 |
| A | JP 11-106531 A (Sekisui Chemical Co., Ltd.), 20 April, 1999 (20.04.99), Par. No. [0004] (Family: none) | 9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003034548 A
- JP 2004002181 A
- JP 2006248867 A
- JP 2004331416 A